(19) Europäisches Patentamt
European Patent Office
Office européen des brevets

(11) Veröffentlichungsnummer: **0 082 305**
**A1**

# (12) EUROPÄISCHE PATENTANMELDUNG

(21) Anmeldenummer: **82110543.4**

(22) Anmeldetag: **16.11.82**

(51) Int. Cl.$^3$: **C 03 B 37/025**

(30) Priorität: **28.11.81 DE 3147244**
**02.02.82 DE 3203349**

(43) Veröffentlichungstag der Anmeldung:
**29.06.83 Patentblatt 83/26**

(84) Benannte Vertragsstaaten:
**AT CH DE FR GB IT LI NL SE**

(71) Anmelder: **Licentia Patent-Verwaltungs-GmbH**
**Theodor-Stern-Kai 1**
**D-6000 Frankfurt/Main 70(DE)**

(72) Erfinder: **Guttmann, Joachim**
**Elchinger Weg 6**
**D-7900 Ulm(DE)**

(72) Erfinder: **Huber, Hans Peter, Dipl.-Phys.**
**Paul-Lincke-Strasse 24**
**D-7910 Neu-Ulm(DE)**

(74) Vertreter: **Schickle, Gerhard, Dipl.-Ing. et al,**
**Licentia Patent-Verwaltungs-GmbH Theodor-Stern-Kai 1**
**D-6000 Frankfurt/Main 70(DE)**

(54) **Verfahren und Vorrichtung zur Herstellung einer optischen Glasfaser mit geringem neg. OH-Ionengehalt.**

(57) Der Erfindung liegt der Gedanke zugrunde, während des Herstellungsprozesses einer optischen Glasfaser, z.B. nach dem MCVD-Verfahren, zumindest während des Ziehprozesses aus dem Vorformrohr und/oder während dessen Lagerung das Rohrinnere mit Chlor- und/oder Fluorgas zu spülen bzw. zu füllen. Dadurch wird bei rationeller Herstellung der Glasfaser ein außerordentlich niedriger $OH^-$-Gehalt im Faserkernbereich erreicht.

EP 0 082 305 A1

Croydon Printing Company Ltd

Licentia Patent-Verwaltungs-GmbH
Theodor-Stern-Kai 1
D-6000 Frankfurt (Main) 70

PTL-UL/Ja/rß
UL 82/8 -
Aktz.: P 32 03 349.4

Beschreibung

Verfahren und Vorrichtung zur Herstellung einer optischen Glasfaser mit niedrigem $OH^-$-Ionengehalt

Die Erfindung betrifft ein Verfahren und eine Vorrichtung zur Herstellung einer optischen Glasfaser nach den Oberbegriffen der Patentansprüche 1 und 6.

Optische Glasfasern, auch Lichtwellenleiter genannt, werden insbesondere in optischen Nachrichtenübertragungsstrecken eingesetzt, die große Abstände (einige km) zwischen Sende- und Empfangsstation aufweisen. Derartige Glasfasern sollen eine möglichst geringe Dämpfung des zu übertragenden Lichts besitzen. Bei der Herstellung der Glasfasern wird im allgemeinen von einer Vorform (preform) ausgegangen, die durch Hitzeeinwirkung zunächst kollabiert und anschließend zu einer Glasfaser ausgezogen wird. Die Vorform besteht z.B. aus einem innenbeschichten (Quarz-) Glasrohr (MCVD- oder CVD-Verfahren) oder aus konzentrisch

...

angeordneten Glasrohren oder aus einer Kombination von Glasrohr(en) und Glasstab (Stab-Rohr-Verfahren). Bei den genannten Herstellungsverfahren ist es in nachteiliger Weise möglich, daß sich an Glasoberflächen, insbesondere an der Rohrinnenfläche, $H_2O$-Moleküle, z.B. aus der Luftfeuchtigkeit anlagern und/oder der Innenraum durch Lecks $H_2O$-Moleküle enthält, die beim anschließenden Ziehen der Fasern aus der Vorform als störende $OH^-$-Ionen im Faserkernbereich eingebaut werden. Derartige $OH^-$-Ionen bewirken durch ihre Absorptionsbanden bei einem fertigen Lichtwellenleiter zusätzliche störende optische Übertragungsverluste in dem für die optische Nachrichtenübertragung besonders interessanten Wellenlängenbereich von ungefähr 1200 nm bis ungefähr 1600nm Die Dämpfung der OH-Absorptionsbande bei 1395nm sollte kleiner als 5 dB/km sein um die Verluste bei den besonders interessanten Wellenlängen 1300 nm und 1550 nm nicht zusätzlich zu erhöhen.

Aufgabe der Erfindung ist es daher, ein Verfahren und eine Vorrichtung anzugeben, die eine Herstellung von optischen Glasfasern rationell mit möglichst geringem ($OH^-$)-Ionengehalt gestatten.

Diese Aufgabe wird gelöst durch die in den kennzeichneden Teilen der Patentansprüche 1 und 6 angegebenen Merkmale.

Weiterbildungen und Ausgestaltungen der Erfindung sind den Unteransprüchen entnehmbar.

Ein Vorteil der Erfindung besteht darin, daß die Herstellzeit und die Reproduzierbarkeit von fertigen Lichtwellenleitern erheblich verkürzt bzw. verbessert wird, da das Kollabieren der Vorformen und das Faserziehen in einem Schritt durchgeführt werden, derart daß gleichzeitig auch ein niedriger $OH^-$-Ionengehalt im Faserkernbereich erreicht wird.

...

Ein weiterer Vorteil besteht in einer Energieersparnis bei der Faserherstellung, da zum Kollabieren und Ziehen die Vorform lediglich einmal erhitzt werden muß.

Die Erfindung wird im folgenden anhand eines Ausführungsbeispiels sowie einer schematischen Zeichnung näher erläutert. Die FIG. zeigt eine zunächst beidseitig offene Vorform 1, z.B. ein (Quarz)-Glasrohr, dessen Ende 4 durch eine Halterung 5 verschlossen wird. Die Halterung 5 ist beispielsweise ein aus einem korrosionsbeständigen Material gefertigtes Drehteil, das eine nicht dargestellte Verschraubung besitzt, die eine lösbare, im wesentlichen gasdichte Befestigung des Glasrohres ermöglicht. An der Halterung 5 sind mindestens zwei gasdicht verschließbare Anordnungen 6 und 8, z.B. Gasventile angebracht, die außerdem einen lösbaren Gas- und/oder Dampfanschluß ermöglichen. Weiterhin besitzt die Halterung 5 einen Ansatz 7, z.B. einen Zapfen, der zur Befestigung der Vorrichtung, z.B. in einer Vorformherstellanlage bzw. in einer Glasfaser-Ziehmaschine dient.

Bei dem beispielhaft gewählten MCVD-Verfahren für die Vorformherstellung werden über die Zuführungen 6 in den Innenraum 2 der Vorform 1 Reaktionsgase und/oder -dämpfe geleitet, die in einer entlang des Gasrohres bewegten nicht dargestellen Heizzone reagieren und zu einer Innenbeschichtung des Glasrohres führen. Während und/oder nach der Innenbeschichtung zumindest aber unmittelbar vor Beginn des Ziehprozesses wird über die Zuleitungen 6 der Halterung 5 durch das Glasrohr 1 beispielsweise Chlorgas hindurchgeleitet. Hierbei kann in dem erhitzten Glasrohr eine chemische Reaktion gemäß der Formel

$$H_2O + Cl \rightleftarrows 2HCl + 1/2\ O_z$$

...

stattfinden. Hierbei handelt es sich um eine Gleichgewichtsreaktion, die bei hohem Chlorgaspartialdruck und durch ständiges Entfernen der HCl-Moleküle stark auf die rechte Seite der Reaktionsgleichung verlagert wird. Auf diese Weise werden evtl. vorhandene oder eindringende $H_2O$-Moleküle wirksam beseitigt. Während dieses Spülvorgangs wird nun das Glasrohr am unteren Ende 3 abgeschmolzen, wobei der Chlorgasstrom erst unmittelbar vor dem endgültigen Verschluß (Verschmelzen) des Glasrohres abgestellt wird. Gleichzeitig oder unmittelbar danach wird in der Halterung 5 ein bisher verschlossenes Ventil 8 geöffnet und der Chlorgasstrom durch eine der Zuführungen 6 in und durch das nun am unteren Ende verschlossene Glasrohr aufrechterhalten. Das untere, verschlossene Ende des Glasrohres wird unter Beibehaltung der Chlorgasspülung anschließend oder nach Zwischenlagerung in den Ziehofen einer Faserziehmaschine eingeführt. Der Faserziehprozeß beginnt durch Abziehen eines Glasfadens aus dem unteren, verschlossenen Ende des Glasrohres, das sich im folgenden durch die Wärme des Ziehofens zur sogenannten Ziehzwiebel ausbildet. Das Ziehen der Glasfaser geschieht nun aus dem Glasrohr wobei Kollabieren und Ziehen in einem Herstellungsschritt erfolgen.

Erfindungsgemäß verläuft dieser Vorgang jedoch unter ständiger Chlorgasspülung des Glasrohres, wodurch ein sehr niedriger OH-Gehalt im Kernbereich der Glasfaser erreicht wird. Das Ziehen aus dem Glasrohr hat den Vorteil, daß ein zeitaufwendiger und kritischer Kollabierprozeß des Glasrohres zum Stab vor dem eigentlichen Ziehvorgang vermieden wird. Weiterhin hat sich gezeigt, daß die geometrischen Abweichungen vom Sollwert, d.h. der Außendurchmesser der Glasfaser und damit auch deren Innendurchmesser, beim

...

Ziehen aus dem Glasrohr auch ohne besondere Regelung des sogenannten Ziehverhältnisses außerordentlich gering sind.

Alternativ zu dem beschriebenen Ablauf, bei welchem der Ziehprozeß unmittelbar an die Vorformherstellung anschließt, ist auch eine Lagerung der Vorform möglich. Hierzu wird die Vorform in der bereits beschriebenen Weise an einem Ende durch Abschmelzen verschlossen. Außerdem werden alle Gasventile der Halterung, nachdem das Glasrohr mit Chlorgas gefüllt ist, verschlossen und das so hermetisch verschlossene Glasrohr samt Halterung bis zum Ziehprozeß gelagert. Der spätere Ziehprozeß erfolgt sinngemäß in der bereits beschriebenen Weise mit Chlorgasspülung.

Weiterhin ist es möglich, das Füllen und Spülen der Vorform erst nach der Lagerung der Vorform vorzunehmen.

Ein weiteres Ausführungsbeispiel besteht darin, bei der beschriebenen Gasspülung Fluor und/oder eine chemische Fluorverbindung zu verwenden, die zumindest während des Ziehprozesses der Glasfaser freies Fluor bildet, das den $OH^-$-Gehalt verringert.

Die Erfindung ist nicht auf das beispielhaft beschriebene MCVD-Verfahren beschränkt, sondern sinngemäß auf andere Herstellungsverfahren für optische Fasern anwendbar, bei denen die Vorform aus mindestens einem Rohr besteht, z.B. Stab-Rohr-Verfahren. Für ein derartiges Verfahren wird beispielsweise lediglich das Endstück 5 dahingehend geändert, daß eine zusätzliche Halterung des (Glas-)Stabes ermöglicht wird.

...

Licentia Patent-Verwaltungs-GmbH
Theodor-Stern-Kai 1
D-6000 Frankfurt (Main) 70

PTL-UL/Ja/rß
UL 82/8
Aktz.: P 32 03 349.4

Patentansprüche

1. Verfahren zur Herstellung einer optischen Glasfaser mit geringem $OH^-$-Ionengehalt aus mindestens einem Vorformrohr, dadurch gekennzeichnet, daß der Innenraum (2) der Vorform (1) vor und/oder während der Herstellung der Glasfaser, zumindest aber während des Ziehprozesses, dampf- und/oder gasförmiges Chlor enthält und daß aus der Chlor enthaltenden rohrförmigen Vorform (1) mindestens eine optische Glasfaser gezogen wird.

2. Verfahren nach Anspruch 1, dadurch gekennzeichnet, daß im Innenraum (2) während der Herstellung der Glasfaser, zumindest aber während des Ziehprozesses, zumindest ein derartiger Chlor-Partialdruck aufrecht erhalten wird, daß der Partialdruck der $H_2O$-Moleküle bzw. Hydroxyl ($OH^-$)-Ionen vernachlässigbar klein wird.

3. Verfahren nach Anspruch 1 oder Anspruch 2, dadurch gekennzeichnet, daß im Innenraum (2) vor und/oder während der Herstellung der Glasfaser, zumindest aber während des Zieh-

...

prozesses, Fluor und/oder eine Fluorverbindung, die zumindest beim Ziehprozeß freies Fluor bildet, verwendet wird.

4. Verfahren nach einem der Ansprüche 1 bis 3, dadurch gekennzeichnet, daß die Vorform (1) im Bereich ihres einen Endes (3) im wesentlichen gasdicht verschmolzen wird und daß das andere Ende (4) durch eine mit verschließbaren Zu- und Ableitungen versehene Halterung (5) derart abgedichtet wird, daß eine Lagerhaltung ermöglichtwird.

5. Verfahren nach Anspruch 4, dadurch gekennzeichnet, daß die Halterung (5) derart ausgebildet wird, daß eine Befestigung der Vorform (1) an einer Glasfaser-Ziehmaschine ermöglicht wird.

6. Vorrichtung zur Durchführung des Verfahrens nach einem der vorhergehenden Ansprüche, dadurch gekennzeichnet, daß an der Vorform (1) eine Halterung (5) vorhanden ist, die mindestens je eine im wesentlichen gasdicht absperrbare Anordnung (6, 8) besitzt, die eine Dampf- und/oder Gasfüllung und/oder -spülung des Glasrohres ermöglichen.

7. Vorrichtung nach Anspruch 6, dadurch gekennzeichnet, daß die Halterung (5) im wesentlichen gasdicht derart an der Vorform (1) befestigt ist, daß nach dem Ziehen der Glasfaser eine Wiederverwendung der Halterung (5) möglich ist.

...

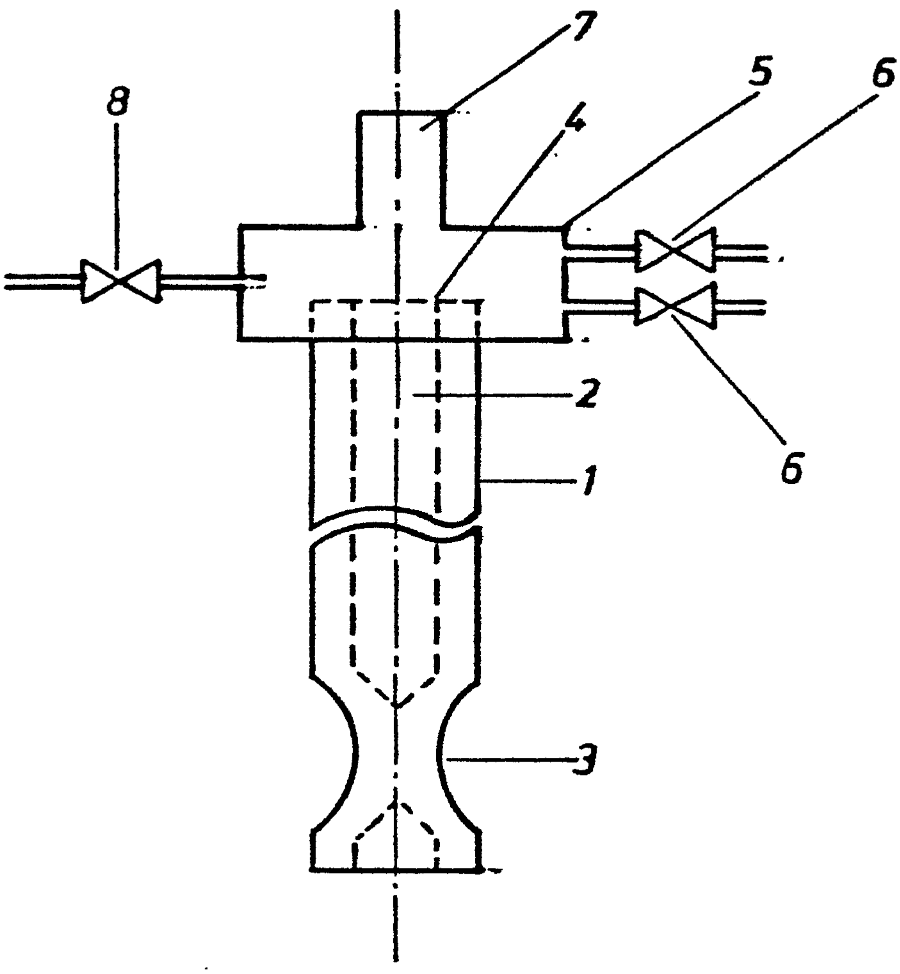
7
5
6
8
4
2
1
6
3

0082305

Europäisches Patentamt

# EUROPÄISCHER RECHERCHENBERICHT

Nummer der Anmeldung

EP 82 11 0543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 328 930 (INTERNATIONAL STANDARD ELECTRIC)<br>* Figur 4; Seite 6, Zeilen 4-18; Anspruch 4 *<br>--- | 1,4 | C 03 B 37/025 |
| P,Y | US-A-4 304 581 (M.A. SAIFI)<br>* Figur 7; Spalte 3, Zeile 50 - Spalte 4, Zeile 37 *<br>--- | 1,2 | |
| Y | APPLIED PHYSICS LETTERS, Band 31, Nr. 8, Oktober 1977, Seiten 515-518<br>T. AKAMATSU et al.: "Fabrication of graded-index fibers without an index dip by chemical vapor deposition method"<br>--- | 1,2 | |
| | | | RECHERCHIERTE SACHGEBIETE (Int. Cl. 3) |
| Y | DE-A-3 037 491 (NIPPON TELEGRAPH & TELEPHONE PUBLIC CORP.)<br>* Ansprüche 11,12; Seite 16, Zeilen 24-27 *<br>--- | 1,2 | C 03 B 37/00 |
| Y | DE-A-2 806 931 (CORNING GLASS WORKS)<br>* Ansprüche 1,3; Figur 4 *<br>--- | 1,2 | |
| P,X | EP-A-0 041 398 (CORNING GLASS WORKS)<br>* Ansprüche 1,2; Figuren 1,2 *<br>----- | 1,2 | |

Der vorliegende Recherchenbericht wurde für alle Patentansprüche erstellt.

| Recherchenort | Abschlußdatum der Recherche | Prüfer |
|---|---|---|
| DEN HAAG | 01-03-1983 | BOUTRUCHE J.P.E. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument